# EUROPEAN PATENT APPLICATION

(11) **EP 2 427 023 A1**
(43) Date of publication of application: **07.03.2012**
(21) Application number: 10782916.0
(22) Date of filing: 22.04.2010
(51) Int. Cl.: H04W 84/18

(54) **METHOD AND EQUIPMENT FOR SELF-CONFIGURING TRANSMISSION IN SELF-ORGANIZED NETWORK**

(30) Priority: 03.06.2009 CN 200910143540
(71) Applicant: ZTE Corporation, Shenzhen, Guangdong 518057 (CN)
(72) Inventor: HU, Guangwu, Shenzhen Guangdong 518057 (CN); HUANG, Haitao, Shenzhen Guangdong 518057 (CN)
(74) Representative: Manitz, Finsterwald & Partner GbR
(86) International application number: PCT/CN2010/072053
(87) International publication number: WO 2010/139212

(57) **Abstract**

The present invention discloses a method and device for transmission self-configuration in a Self-Organized Network (SON), said method includes: a Dynamic Host Configuration Protocol (DHCP) client reporting a device identifier of this DHCP client to a DHCP server; said DHCP server configuring a transmission parameter for said DHCP client according to said device identifier, and sending said transmission parameter down to said DHCP client, said transmission parameter at least including an IP address of said DHCP client; and said DHCP client performing self-configuration according to said transmission parameter. The present invention uses the device identifier to allocate a fixed IP address, which is able to overcome the drawbacks caused by using the MAC address to allocate the fixed IP, and has a very strong maintainability.

## Description

### Technical Field

The present invention relates to relative fields of the Self-Organized Network (SON) and the Dynamic Host Configuration Protocol (DHCP), and particularly, to a method and device for transmission self-configuration in a SON.

### Background of the Related Art

The DHCP can solve the problem of automatically allocating the IP address in the large-scale network, but for the convenience of the network and device management, the fixed IP address may require obtaining according to the user device identifier. For the current base stations, the field configuration engineers should use the laptop to configure transmission parameters such as the initial IP address and so on for each site, then the Operation and Maintenance Centre (OMC, namely the network management center) can just perform management on it, and the Long Term Evolution (LTE) introduces the concept of the SON, SON transmission self-establishment is required self-configure transmission parameters and self establish transmission channels in the base station.

Existing SON transmission self-establishment usually uses the manner of allocating the fixed IP according to the Medium Access Control (MAC) address and then the base station obtaining transmission configuration data from the OMC to perform self-configuration, however there are the following drawbacks:
1. the fixed allocation based on the MAC address is inconvenient for network management, the MAC address can only represent one network card, the device may have a plurality of network cards, the network cards may changes, and it can not represent one device;
2. As the MAC addresses owned by the manufacturers are limited, the manufacturers generally use the same set of MAC addresses for different areas, and the MAC addresses do not have conflicts basically in the same region; if there are minority MAC conflicts, the base station uses the manner of detecting conflicts and changing the MAC according to certain algorithms, which will cause the baneful influence such as the IP corresponding to the MAC address can not be obtained or obtaining conflicts results in the drop of the base station, and constant obtaining results network storm and so on;
3. the transmission parameters should be managed on the DHCP server and the OMC at the same time, which does not have the self-organization expansibility.

### Summary of the Invention

The present invention proposes a method and device for transmission self-configuration in a SON, which solve the above drawbacks caused by using the MAC address to allocate the fixed IP in prior art.

In order to solve the above technical problems, the present invention provides a method for transmission self-configuration in a Self-Organized Network (SON), and comprises:
a Dynamic Host Configuration Protocol (DHCP) client reporting a device identifier of this DHCP client to a DHCP server;
said DHCP server configuring a transmission parameter for said DHCP client according to said device identifier, and sending said transmission parameter down to said DHCP client, said transmission parameter at least including an IP address of said DHCP client; and
said DHCP client performing self-configuration according to said transmission parameter.

The above method can further have the following characteristics:
said transmission parameter further includes a Stream Control Transport Protocol (SCTP) port number of said DHCP client, an IP address and a SCTP port number of a Mobile Management Entity (MME);
the method further comprises: said DHCP client performing to establish a link with a SCTP of the MME according to said transmission parameter, and completing transmission self-establishment.

The above method can further comprise:
said DHCP client setting a trusted DHCP server identifier;
when said DHCP server sends said transmission parameters down to the DHCP client, further sending a self-identifier to said DHCP client; and
said DHCP client performing authentication according to a received DHCP server identifier before using said transmission parameter to perform the self-configuration, and using said transmission parameter to perform the self-configuration until confirming that this received DHCP server identifier belongs to the trusted DHCP server identifier.

The above method can further comprise:
after confirming that said DHCP server identifier belongs to the trusted DHCP server identifier, said DHCP client sending a DHCP message to the DHCP server, and confirming that an IP address of the DHCP client is occupied.

The above method can further have the following characteristics:
said DHCP client and DHCP server pre-appoint predetermined meanings of a DHCP message option fields;
in the step of the DHCP client reporting the device identifier of this DHCP client to the DHCP server, said DHCP client includes the device identifier of this DHCP client through pre-appointed DHCP message option fields, and reports the device identifier of this DHCP client to said DHCP server;
in the step of said DHCP server sending the self-identifier to said DHCP client, said DHCP server includes the self-identifier through pre-appointed DHCP message option fields, and sends the self-identifier to said DHCP client.

The above method can further have the following characteristics:
said DHCP server includes said transmission parameter through pre-appointed DHCP message option fields, and sends the transmission parameter to said DHCP client.

The above method can further have the following characteristics:
the DHCP server is set with a corresponding table of the device identifier and the transmission parameter; when the DHCP client reports the device identifier of the DHCP client to the DHCP server, said DHCP server configures the transmission parameter for said DHCP client according to said corresponding table.

The present invention further provides a Dynamic Host Configuration Protocol (DHCP) client for supporting transmission self-configuration in a Self-Organized Network (SON), and said DHCP client is set to: report a device identifier of this DHCP client to DHCP server; perform self-configuration according to a transmission parameter sent by a DHCP server, and perform to establish a link with a Stream Control Transport Protocol (SCTP) of a Mobile Management Entity (MME).

The above DHCP client is further set to: set a trusted DHCP server identifier, perform authentication according to a received DHCP server identifier, and use said transmission parameter to perform self-configuration only if the received DHCP server identifier belongs to the trusted DHCP server identifier.

The present invention further provides a Dynamic Host Configuration Protocol (DHCP) server for supporting transmission self-configuration in a Self-Organized Network (SON), and the DHCP server is set to: configure a transmission parameter for a DHCP client according to a device identifier of the DHCP client, and send the transmission parameter down to said DHCP client so that said DHCP client performs self-configuration according to said transmission parameter and performs to establish a link with a Stream Control Transport Protocol (SCTP) of a Mobile Management Entity (MME).

The above DHCP server is further set to: when sending the transmission parameter down to DHCP client, send a self-identifier to said DHCP client so that said DHCP client performs authentication according to said identifier.

In order to solve the above technical problem, the present invention further provides a device for transmission self-configuration in a Self-Organized Network (SON), which comprises a Dynamic Host Configuration Protocol (DHCP) client and a DHCP server, wherein,
the DHCP client is set to: report a device identifier of this DHCP client to a DHCP server, and perform self-configuration according to a transmission parameter sent by the DHCP server;
said DHCP server is set to: configure the transmission parameter for said DHCP client according to the device identifier, and send the transmission parameter down to said DHCP client so that said DHCP client performs self-configuration according to said transmission parameter;
said transmission parameter at least includes an IP address of said DHCP client.

The above device can further have the following characteristics:
said transmission parameter further includes a Stream Control Transport Protocol (SCTP) port number of said DHCP client, and an IP address and a SCTP port number of a Mobile Management Entity (MME);
said DHCP client is further set to: perform to establish a link with a SCTP of the MME according to said transmission parameter, and complete transmission self-establishment.

The above device can further have the following characteristics:
said DHCP client is further set to: set a trusted DHCP server identifier, and perform authentication according to a received DHCP server identifier, and use the transmission parameter to perform self-configuration only if the received DHCP server identifier belongs to trusted DHCP server identifier;
the DHCP server is further set to: send a self-identifier down to the DHCP client when sending transmission parameters down to the DHCP client so that said DHCP client performs authentication according to said identifier.

The present invention proposes a method of using the device identifier (usually it can represent asset management information of the whole device, etc.) to allocate the fixed IP, the DHCP server configures the transmission parameter, and sends the transmission parameter down to the base station together with the IP address, the base station performs self-configuration, and completes the process of transmission self-establishment. Engineering maintenance personnel only needs to report the device identifier which is stored in the electronic disk and tagged on an obvious place at the same time to the OMC, and the OMC sets IP and other parameters correspondingly on the DHCP server, which can complete self-configuration and self-establishment of the transmission, and have strong maintainability.

### Brief Description of Drawings

FIG. 1 is schematic diagram of the device of the example of the present invention;
FIG. 2 is flow chart of the method of the example of the present invention;
FIG. 3 is flow chart of the application example of the present invention.

### Preferred Embodiments of the Present Invention

The LTE introduces the important function of the SON, and the core concept of the SON is to decrease manual intervention as much as possible in the process of start and operation of the base station.

In the present invention, a DHCP client (a base station) reported its device identifier up to the DHCP server; the DHCP server configures transmission parameters for the DHCP client according to the device identifier, and transmits the transmission parameters down to the DHCP client so that the DHCP client can complete the process of self-configuration and self-establishment.

Wherein, the transmission parameters at least include an IP address of the DHCP client, and further can include coupling related information such as a Stream Control Transport Protocol (SCTP) port number of the DHCP client, and an IP address and a SCTP port number of the Mobile Management Entity (MME) and so on.

Besides, the DHCP server can send the DHCP server identifier to the DHCP client, the DHCP client performs authentication on the DHCP server according to this identifier, and uses the allocated transmission parameters until passing the authentication.

The followings describe the present invention in detail with reference to figures and particular examples.

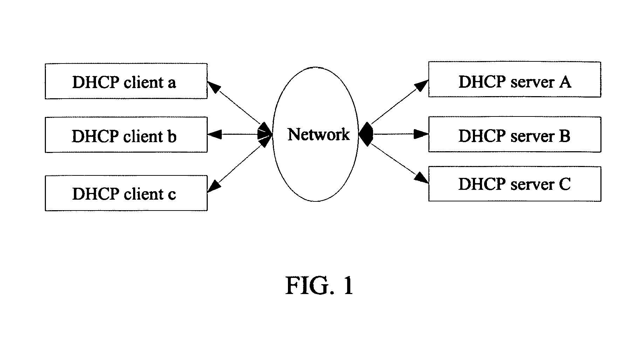

As shown in FIG. 1, the device of the example of the present invention comprises a DHCP client and a DHCP server,
the DHCP client is set to: report its device identifier to a DHCP server, and perform self-configuration and self-establishment according to transmission parameters sent by the DHCP server; the DHCP server is set to: configure transmission parameters for the DHCP client according to the device identifier, and send the transmission parameters down to the DHCP client.

The DHCP client is further set to: set trusted DHCP server identifiers, perform authentication according to the received DHCP server identifier, , and use the transmission parameters to perform self-configuration only if the received DHCP server identifier belongs to trusted DHCP server identifiers; when the DHCP server is further set to send the transmission parameters down to the DHCP client, the DHCP server further sends the self-identifier to the DHCP client.

In this example, the DHCP client is the DHCP client designed for satisfying special needs, and it comprises that the DHCP client can perform simple authentication on the DHCP server and can identify and take use of the data information which is sent down by the DHCP server though DHCP massage option fields; the DHCP server does not need special design in the condition of satisfying to be able to configure self-identifier information and configure values of DHCP massage option fields regarding to the device identifier reported by DHCP client.

As shown in FIG. 1, DHCP clients a∼c can use the broadcasting manner to report their device identifiers, the DHCP servers A∼B will all receive the reported device identifiers; the DHCP servers A∼B search the table according to received device identifiers and judge whether the DHCP servers A∼B are needed to allocate the transmission parameters, if needed, send the allocated transmission parameters to corresponding DHCP clients; and DHCP clients can also perform authentication on the DHCP server according to received DHCP server identifiers.

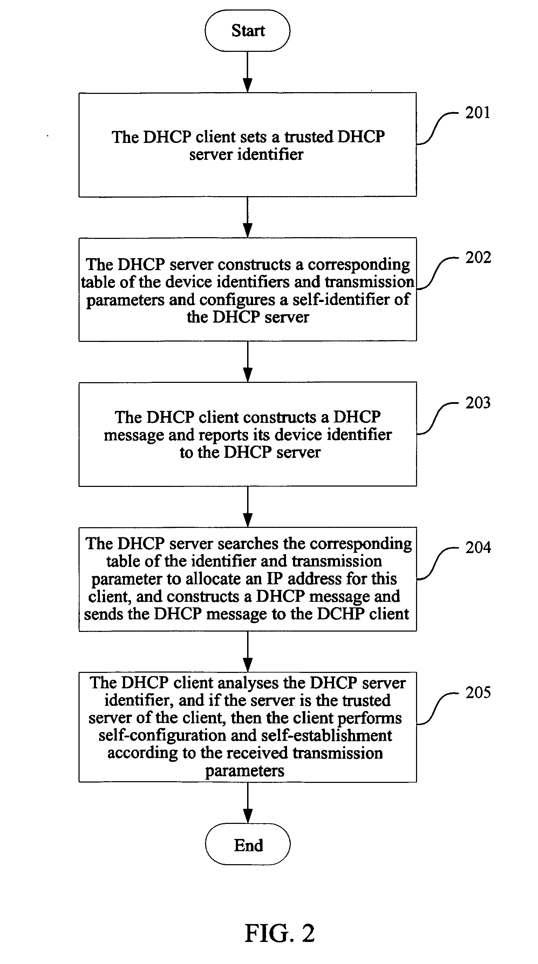

As shown in FIG. 2, the example of the present invention implements the process of statically allocating the IP, it requests that the device has the unique device identifier, and the particular steps are as follows:
step 201, the DHCP client sets a trusted DHCP server identifier;
step 202, the DHCP server constructs a corresponding table of the device identifiers and the transmission parameters according to various factors such as the transmission network planning and so on, and configures a self-identifier of the DHCP server;
wherein the transmission parameters at least include the IP address of the DHCP client, and further can include coupling related information such as the SCTP port number of the DHCP client, the IP address and the SCTP port number of MME and so on;
step 203, the DHCP client constructs a DHCP message and reports its device identifier to the DHCP server;
the DHCP client can appoint the predefined meanings of DHCP message option fields with the DHCP server in advance, and in this step, the DHCP client can send the DHCP DISCORVER message to the DHCP server, and include the device identifier into the field of the option 77 (user class id) in this message;
step 204, the DHCP server searches the corresponding table of the identifier and the transmission parameter according to the device identifier provided by DHCP client to allocate an IP address for this client, constructs a DHCP message which includes the IP address of this client and the self-identifier of the DHCP server in the message, and sends the message to the DHCP client;
in this step, if the DHCP server fails to search the corresponding table, then it discards the message sent by this DHCP client, and does not execute the subsequent steps any more;
in this step, the DHCP server can construct a DHCP OFFER message, include the DHCP server identifier in the option 43 (Vendor Specific Information) field, and include other transmission parameters (such as the IP address of the MME, etc.) in other option fields (fields such as the option 6 and the option 4l,etc.);
if the DHCP server can allocate fixed IP addresses, then the IP address of the client can be included in the text of the DHCP OFFER message; if the universal DHCP server is used, and as it uses address pool management and can not allocate the fixed IP to the DHCP client, then the DHCP server can use the option 41 (NIS) in DHCP OFFER message to include allocated IP address;
step 205, the DHCP client analyses the DHCP server identifier, and if the server is the trusted server of this client, then the client performs self-configuration and self-establishment according to the received transmission parameters;
in this step, if the DHCP client judges that the server is the trusted server of the client according to the DHCP server identifier, then the DHCP client sends the DHCP INFORM massage to the DHCP server, and confirms that the IP address is occupied, and the DHCP server returns the ACK to the client after receiving DHCP INFORM message; if the DHCP client judges the servers is the distrusted server according to the DHCP server identifier, then the DHCP client discards this DHCP OFFER message.

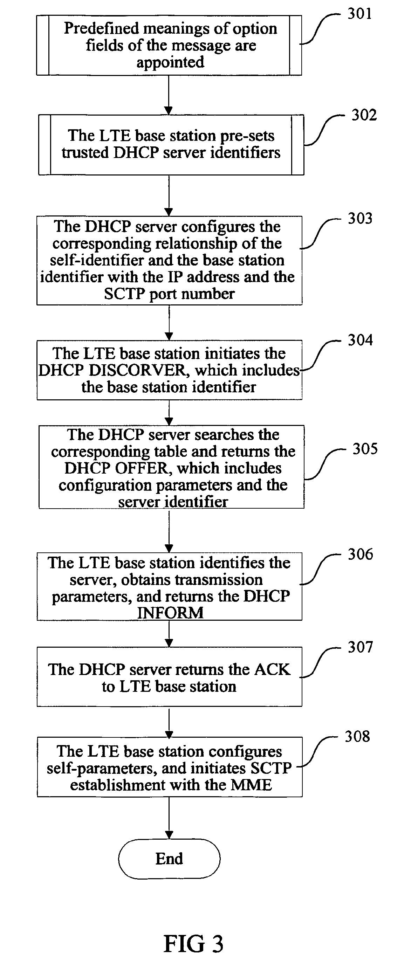

The followings further describe the present invention by one particular application example:
as shown in FIG. 3, it is assumed that the present invention is used for the transmission self-establishment of the LTE base station (DHCP clients), the base station obtains the transmission parameters such as the self-IP address and the SCTP port number, the IP address and the SCTP port number of the MME and so on from the DHCP server when it is powered on, then the base station configure the base station self to complete the transmission self-establishment, and the particular steps are as follows:
   step 301, the LTE base station and the DHCP server appoint predefined meanings of option fields, which particularly are included in the subsequent steps;
   step 302, the LTE base station pre-sets trusted DHCP server identifiers;
   step 303, the OMC (used for managing LTE base stations and the DHCP servers) configures the corresponding table of the LTE base station identifier and the IP address, and the SCTP port number on the DHCP server according to various factors such as transmission network planning and so on, and configures a self-identifier of the DHCP server;
   step 304, the LTE base station constructs the DHCP DISCORVER message, and reports the base station identifier by the option 77 (user class id);
   step 305, the DHCP server searches the corresponding table of the identifier and the IP and so on according to the device identifier provided by the LTE base station to allocate an IP address, and constructs a DHCP OFFER message, which includes the DHCP server identifier in the option 43 (Vendor Specific Information) field, includes the IP address of the MME in the option 6, includes the IP address of the base station in the option 41, and includes the coupling port number of the base station and the MME in the option 44; if the DHCP server fails to search the corresponding table, then it discards this message, and does not execute the subsequent steps any more;
   step 306, the LTE base station analyses the DHCP server identifier, and if the server is the trusted server of the client, then the LTE base station sends a DHCP INFORM massage to the DHCP server, and confirms that the IP address is occupied; if the server is the distrusted server, then the LTE base station discards the message, and does not execute the subsequent steps any more;
   step 307, the DHCP server returns the ACK to the LTE base station after receiving the DHCP INFORM massage;
   step 308, the LTE base station configures self-parameters after receiving the response, initiates the request for establishing the SCTP link to the MME, and completes the transmission self-establishment.

In conclusion, the present invention proposes a method and its device for implement the IP static allocation of the DHCP, the method and its device are suitable for the scenario that the particular device is needed to allocate fixed IP , and especially suitable for the transmission self-establishment needed by the SON of the LTE base station.

Certainly, the present invention can further have other various examples, and the skilled in the art can make all kinds of corresponding changes and transformations according to the present invention without departing the spirit and its essentiality of the invention, however, these corresponding changes and transformations should all belong to the protection scope of appended claims of the present invention.

### Industrial Applicability

Compared with the prior art, the method and device for transmission self-configuration in a Self-Organized Network provided by the present invention have strong maintainability.

## Claims

1. A method for transmission self-configuration in a Self-Organized Network (SON), which comprises:
a Dynamic Host Configuration Protocol (DHCP) client reporting a device identifier of this DHCP client to a DHCP server;
said DHCP server configuring a transmission parameter for said DHCP client according to said device identifier, and sending said transmission parameter down to said DHCP client, said transmission parameter at least including an IP address of said DHCP client; and
said DHCP client performing self-configuration according to said transmission parameter.

2. The method according to claim 1, wherein,
said transmission parameter further includes a Stream Control Transport Protocol (SCTP) port number of said DHCP client, an IP address and a SCTP port number of a Mobile Management Entity (MME);
the method further comprises: said DHCP client performing to establish a link with a SCTP of the MME according to said transmission parameter, and completing transmission self-establishment.

3. The method according to claim 1, further comprising:
said DHCP client setting a trusted DHCP server identifier;
when said DHCP server sends said transmission parameters down to the DHCP client, further sending a self-identifier to said DHCP client; and
said DHCP client performing authentication according to a received DHCP server identifier before using said transmission parameter to perform the self-configuration, and using said transmission parameter to perform the self-configuration until confirming that this received DHCP server identifier belongs to the trusted DHCP server identifier.

4. The method according to claim 3, further comprising:
after confirming that said DHCP server identifier belongs to the trusted DHCP server identifier, said DHCP client sending a DHCP message to the DHCP server, and confirming that an IP address of the DHCP client is occupied.

5. The method according to claim 3, further comprising:
said DHCP client and DHCP server pre-appointing predetermined meanings of a DHCP message option fields;
in the step of the DHCP client reporting the device identifier of this DHCP client to the DHCP server, said DHCP client including the device identifier of this DHCP client through pre-appointed DHCP message option fields, and reporting the device identifier of this DHCP client to said DHCP server;
in the step of said DHCP server sending the self-identifier to said DHCP client, said DHCP server including the self-identifier through pre-appointed DHCP message option fields, and sending the self-identifier to said DHCP client.

6. The method according to claim 5, wherein,
in the step of sending the transmission parameter down to said DHCP client, said DHCP server includes said transmission parameter through pre-appointed DHCP message option fields, and sends the transmission parameter to said DHCP client.

7. The method according to claim 1, wherein,
the DHCP server is set with a corresponding table of the device identifier and the transmission parameter;
in the step of configuring the transmission parameter for said DHCP client, said DHCP server configures the transmission parameter for said DHCP client according to said corresponding table.

8. A Dynamic Host Configuration Protocol (DHCP) client for supporting transmission self-configuration in a Self-Organized Network (SON), and said DHCP client being set to:
report a device identifier of this DHCP client to DHCP server; perform self-configuration according to a transmission parameter sent by a DHCP server, and perform to establish a link with a Stream Control Transport Protocol (SCTP) of a Mobile Management Entity (MME).

9. The DHCP client according to claim 8, said DHCP client being further set to:
set a trusted DHCP server identifier, perform authentication according to a received DHCP server identifier, and use said transmission parameter to perform self-configuration only if the received DHCP server identifier belongs to the trusted DHCP server identifier.

10. A Dynamic Host Configuration Protocol (DHCP) server for supporting transmission self-configuration in a Self-Organized Network (SON), and the DHCP server being set to:
configure a transmission parameter for a DHCP client according to a device identifier of the DHCP client, and send the transmission parameter down to said DHCP client so that said DHCP client performs self-configuration according to said transmission parameter and performs to establish a link with a Stream Control Transport Protocol (SCTP) of a Mobile Management Entity (MME).

11. The DHCP server according to claim 10, the DHCP server being further set to:
when sending the transmission parameter down to DHCP client, send a self-identifier to said DHCP client so that said DHCP client performs authentication according to said identifier.

12. A device for transmission self-configuration in a Self-Organized Network (SON), which comprises a Dynamic Host Configuration Protocol (DHCP) client and a DHCP server, wherein,
the DHCP client is set to: report a device identifier of this DHCP client to a DHCP server, and perform self-configuration according to a transmission parameter sent by the DHCP server;
said DHCP server is set to: configure the transmission parameter for said DHCP client according to the device identifier, and send the transmission parameter down to said DHCP client so that said DHCP client performs self-configuration according to said transmission parameter;
said transmission parameter at least includes an IP address of said DHCP client.

13. The device according to claim 12, wherein,
said transmission parameter further includes a Stream Control Transport Protocol (SCTP) port number of said DHCP client, and an IP address and a SCTP port number of a Mobile Management Entity (MME);
said DHCP client is further set to: perform to establish a link with a SCTP of the MME according to said transmission parameter, and complete transmission self-establishment.

14. The device according to claim 12, wherein,
said DHCP client is further set to: set a trusted DHCP server identifier, and perform authentication according to a received DHCP server identifier, and use the transmission parameter to perform self-configuration only if the received DHCP server identifier belongs to trusted DHCP server identifier;
the DHCP server is further set to: send a self-identifier down to the DHCP client when sending transmission parameters down to the DHCP client so that said DHCP client performs authentication according to said identifier.
